Europäisches Patentamt

European Patent Office

Office européen des brevets

(11) Publication number: 0 295 909
A2

# EUROPEAN PATENT APPLICATION

(21) Application number: 88305498.3

(22) Date of filing: 16.06.88

(51) Int. Cl.⁴: G11B 23/04

(30) Priority: 18.06.87 GB 8714272
22.07.87 GB 8717343

(43) Date of publication of application:
21.12.88 Bulletin 88/51

(84) Designated Contracting States:
BE DE FR IT NL

(71) Applicant: C + E INTERNATIONAL LIMITED
Lower Monk Street
Abergavenny Gwent NP7 5YG(GB)

(72) Inventor: Cecil, Don Robert
"The White House"Llanfoist
Abergevenny Gwent(GB)
Inventor: Evans, Richard Paul
69 Wyedean Rise Priory Fields
Belmont Herefordshire(GB)

(74) Representative: Newstead, Michael John et al
Page & Co. Temple Gate House Temple Gate
Bristol BS1 6PL(GB)

(54) Magnetic tape reading and/or writing equipment inspector.

(57) An inspector for inspecting parts of magnetic tape reading and/or writing equipment comprises a cartridge insertable into the equipment in place of the magnetic tape cartridge that the equipment is designed to accept. The parts to be inspected are then illuminated by illumination means (4) carried by the cartridge, and are viewed via a viewing path (VP or VP1 or VP2 or VP3) through the cartridge. In this way, with the cartridge in position, parts which are otherwise unviewable can be viewed without dismantling the equipment. A removable light reflector (15) can be provided to give alternative viewing paths (VP1, VP2, VP3).

FIG. 1

## MAGNETIC TAPE READING AND/OR WRITING EQUIPMENT INSPECTOR

This invention relates to an inspector for inspecting parts of magnetic tape reading and/or writing equipment, such as the read and write head arrangement and components of tape drive means such as drive rollers and guide posts.

It is necessary to clean, from time to time, the magnetic head arrangements such as the read and write arrangements of magnetic tape reading and/or writing equipment. It is also necessary to clean components of the tape drive equipment such as drive rollers and guide posts. To avoid unnecessary wearing of the heads by too frequent cleaning, it is preferable visually to inspect the parts to be cleaned, prior to cleaning, to ascertain whether or not cleaning is required. However, in many forms of equipment, particularly computer tape reading and/or writing equipment, the head arrangements are so positioned that they cannot be seen clearly (or at all) without dismantling at least part of the equipment. Also, it is not unusual for the head arrangement to have an inoperative position in which it is out of view of a user looking through the cartridge-accepting aperture of the equipment, the head arrangement being moved from this position into an operative position by a tape cartridge as it is inserted into the equipment, the head arrangement in operative position then being obscured from view by the cartridge. A further problem is that components of the tape drive equipment may be positioned somewhat remote from the magnetic head arrangement and hence difficult to view along with the head arrangement.

According to the present invention there is provided an inspector for inspecting parts of magnetic tape reading and/or writing equipment, the inspector comprising a cartridge insertable into the equipment in place of the magnetic tape cartridge that the equipment is designed to accept, illumination means carried by the cartridge for illuminating parts to be inspected and a viewing path through the cartridge such that the illuminated parts can be viewed via this path. It will be appreciated that since this inspector is a cartridge that replaces the magnetic tape cartridge that the equipment is designed to accept, by inserting this inspector into the equipment the illumination provided by the inspector will be directed at the parts it is desired to inspect and these parts can be viewed via the viewing path in the inspector without dismantling the equipment.

In some forms of equipment magnetic read and write head arrangements in their operative position are in direct line with the entry to the cartridge-accepting aperture of the equipment and for viewing such a head arrangement the viewing path of the inspector is a straight path through the inspector. In other forms of equipment magnetic read and write head arrangements in their operative position are to one side or the other of the cartridge-accepting aperture. For viewing such a head arrangement a form of the inspector includes light reflecting means in the viewing path of the inspector such that the viewing path includes a right angle. Preferably the light reflecting means is insertable into the inspector so as to convert the straight viewing path into one that includes a right angle, and it is also preferable that the reflecting means is insertable in one or other of two positions so that the right angle in the viewing path can be selected to be of one hand or of the opposite hand. A periscope means can be provided for attachment to the remainder of the inspector to assist viewing where the cartridge-accepting aperture is itself positioned to inhibit viewing of the parts through the aperture.

For a better understanding of the invention and to show how the same may be carried into effect, reference will now be made, by way of example, to the accompanying drawings, in which:-

Figure 1 is a plan view of the body of an inspector for inspecting the magnetic read and write head arrangements of magnetic tape reading and/or writing equipment, a cover of the inspector being removed,

Figure 2 is a rear view of the inspector body of Figure 1,

Figure 3 is a plan view of the undersurface of the cover of the inspector,

Figure 4 is a plan view of a light reflector that can be fitted in the inspector body,

Figure 5 is a side view of the light reflector,

Figure 6 is a front view of a periscope that can be fitted to the inspector body,

Figure 7 is a sectional side view of the periscope, and

Figure 8 is a view similar to Figure 1 of a further form of inspector.

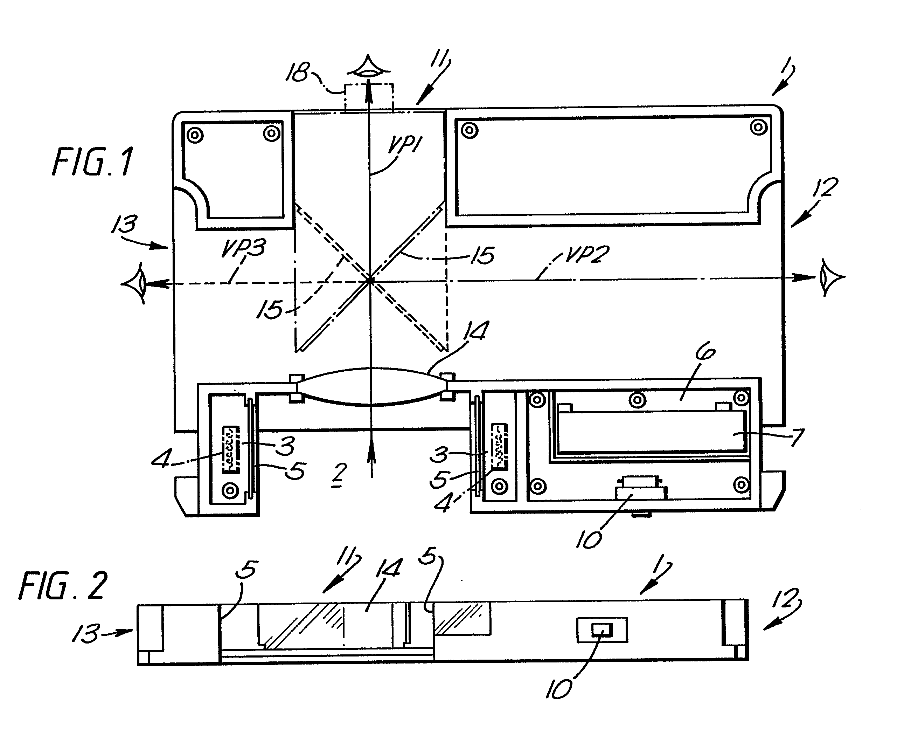

The inspector of Figures 1 to 7 is for inspecting the magnetic read and write head arrangements of particular forms of magnetic tape reading and/or writing equipment. It will be understood that such equipment is designed to accept magnetic tape cartridges of a standard configuration and the inspector of the Figures is a cartridge of a configuration sufficiently similar to the standard configuration to be insertable in the cartridge-accepting aperture in place of the standard magnetic tape cartridge, and such as to have the same mechanical effects as the standard cartridge.

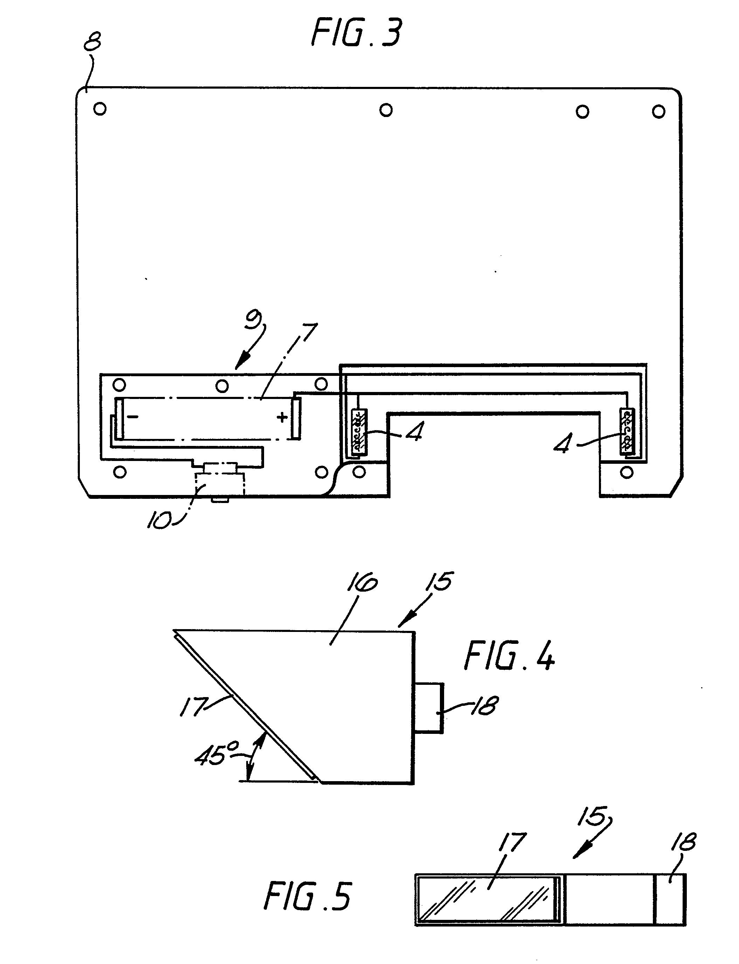

The body 1 of the inspector has, at the zone at which a standard magnetic tape cartridge presents its tape for co-operation with tape read and write head arrangements, a cut-away 2. On each side of this cutaway 2 there is a housing area 3 for receiving a light source 4 that can direct light into the area of the cut-away 2 through a transparent panel 5. Near the light source housing areas 3 there is a housing area 6 for a dry cell 7. The light sources 4,4 are carried by the cover 8 (Figure 3) to be received in the areas 3 when the cover 8 is fitted to the body 1.

In the assembled inspector, the dry cell 7 is connected to the light sources 4,4 by a conduction arrangement 9 (Figure 3) via an on/off switch 10 carried by the body 1.

The cut-away 2 is positioned so as to be open to the magnetic head arrangement of equipment in which the inspector is inserted. The inspector has first, second and third viewing apertures 11, 12 and 13. The viewing aperture 11 is positioned such that the area of the cut-away 2 can be viewed directly via a straight viewing path as shown by full line VP1 in Figure 1. Included in this viewing path is a magnifier lens 14 mounted in the body 1.

A light reflector 15 (Figures 4 and 5) is insertable into the body 1 through the viewing aperture 11 in one or other of two positions as illustrated by chain dot lines and dotted lines in Figure 1. The light reflector 15 consists of a suitably dimensioned block 16 that carries a mirror 17 set at $45°$ to the parallel sides of the block.

Where a magnetic head arrangement to be inspected is, in its operative position, in direct line with the entry to the cartridge-accepting aperture of the equipment, the inspector is used without the light reflector 15. The light sources 4,4 are switched on and the inspector is inserted into the equipment just as if it were a normal standard magnetic tape cartridge. The illuminated head arrangement can then be viewed through the viewing aperture 11 via the straight line path VP1.

If, instead, the equipment is of a form in which the inspector has to be inserted with its side to the left as viewed in Figure 1 leading, then prior to insertion the reflector 15 is inserted in the inspector body 1 through the viewing aperture 11 so as to be positioned as shown in chain dot lines in Figure 1. The presence of the reflector 15 has the effect that there is now a viewing path VP2 that includes a right angle, and the illuminated head arrangement can be viewed through the viewing aperture 12. Alternatively, if it is the right hand side of the body 1 as viewed in Figure 1 that has to lead, the reflector 15 is inserted so as to be positioned as shown in dotted lines in Figure 1 with the result that there is a viewing path VP3 that includes a right angle, this viewing path VP3 being of opposite hand as compared with the viewing path VP2. The illuminated head arrangement can be viewed through the viewing aperture 13. It will be noted that each of the paths VP1, VP2 and VP3 includes the magnifier lens 14.

The reflector block 16 is provided with a lug 18 that projects from the aperture 11 when the reflector is mounted in the body 1 to facilitate removal of the reflector from the body 1.

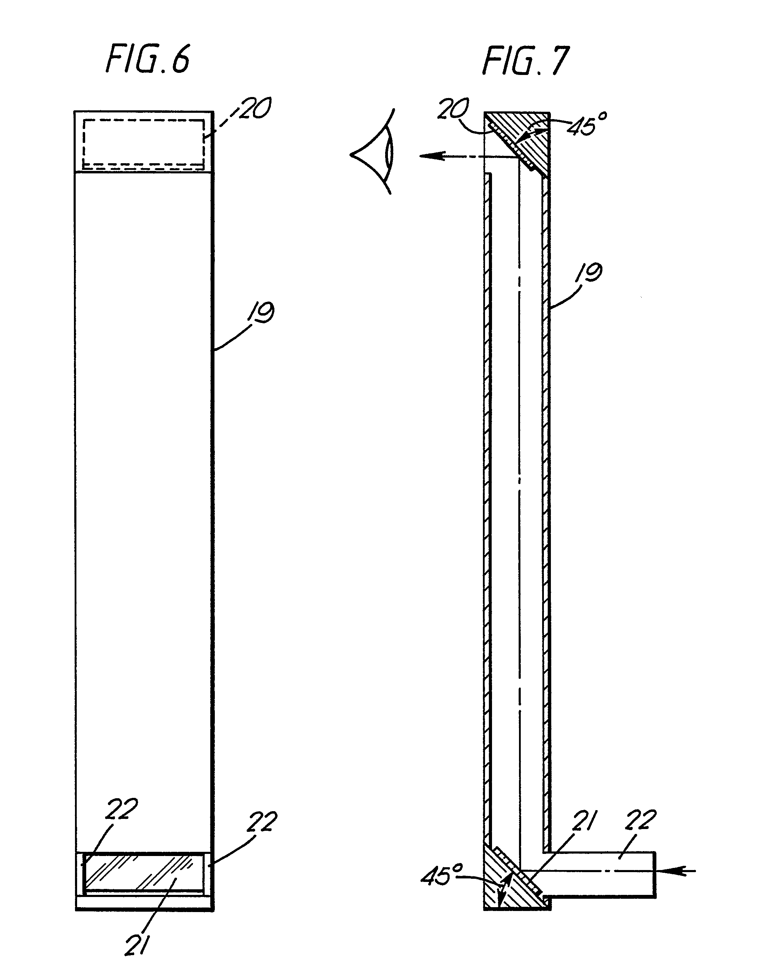

In some forms of equipment the cartridge-accepting aperture is positioned so as to inhibit viewing of the magnetic head arrangement through this aperture even when the present inspector is utilised. There is thus provided the periscope 19 shown in Figures 6 and 7. This periscope includes, in conventional fashion, two spaced apart mirrors 20 and 21 each inclined at an angle of $45°$ to a line passing through the mirrors. At the foot of the periscope 19 there are two arms 22 that can be engaged in any selected one of the three viewing apertures 11, 12, 13 of the inspector body 1 such that the periscope 19 is then upstanding from the body 1, or depends therefrom, and the illuminated magnetic head arrangement can be viewed at the free end of the periscope.

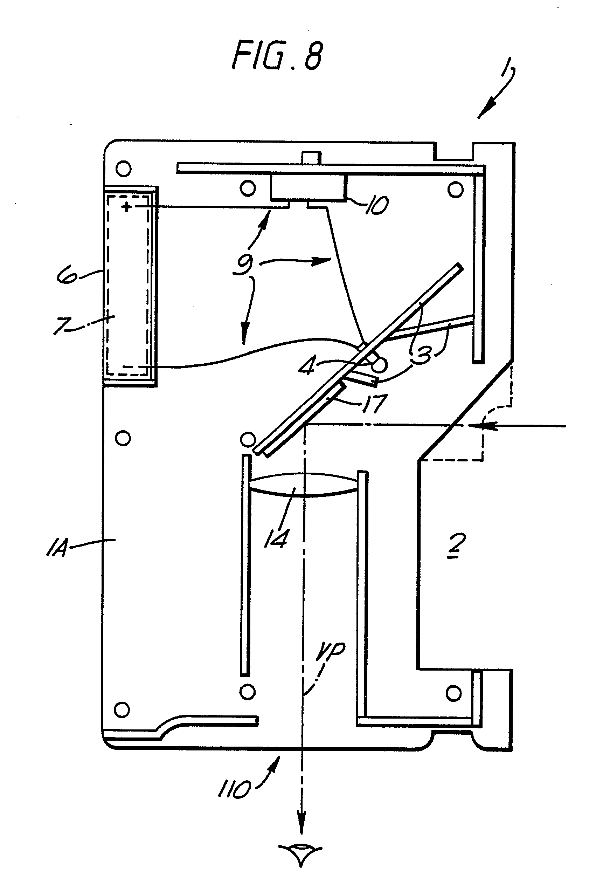

As in the case of the inspector just described, the inspector of Figure 8 is for use with a particular form of magnetic tape read/write equipment, and is a cartridge of configuration sufficiently similar to that of a standard cartridge as to be acceptable by the equipment. The body 1 of this inspector has, at the zone at which a standard magnetic tape cartridge presents its tape for co-operation with tape read and write arrangements, a cut-away 2 that extends over a major portion (about one half) of the total length of one side of the base 1A of the body 1. Inwardly of the cut-away 2 there is a light shielding arrangement 3 within which a light source 4 is mounted that can direct light into the area of the cut-away 2. A housing area 6 receives a dry cell 7 that is connected to the light source 4 by a conduction arrangement 9 via an on/off switch 10 carried by the body 1. A lid fits on to the base 1A over the above-mentioned components, and has the same shape as the base 1A except for the part shown in broken lines over part of the cut-away 2.

The cut-away 2 is positioned so as to be open to the magnetic head arrangement of equipment in which the inspector is inserted, and is sufficiently large to be open also to tape drive components such as drive rollers and guide posts positioned somewhat remote from the head arrangement. The inspector has a single viewing aperture 110 positioned such that the area of the cut-away 2 can be viewed via a viewing path VP that includes a magnifier lens 14 and a light reflector 15 that is a mirror 17 set permanently in the body 1 so as to reflect light through $90°$.

In order to inspect a magnetic head arrangement and tape drive components, the light source 4 is switched on and the inspector is inserted into the equipment just as if it were a normal standard magnetic tape cartridge for the equipment. The magnetic head arrangement and tape drive components are illuminated and can be viewed via the viewing path VP.

The inspector can be utilised with the periscope 19 shown in Figure 6 and 7 engaged in its viewing aperture 110 if necessary to facilitate inspection.

The inspectors that have been described in detail are for use with computer tape read/write equipment but the inspectors could be of some other configuration sufficiently similar to a magnetic tape cartridge intended for use with some other form of magnetic tape reading and/or writing equipment.

**Claims**

1. An inspector for inspecting parts of magnetic tape reading and/or writing equipment, the inspector comprising a cartridge insertable into the equipment in place of the magnetic tape cartridge that the equipment is designed to accept, illumination means (4) carried by the cartridge for illuminating the parts to be inspected, and a viewing path (VP or VP1 or VP2 or VP3) through the cartridge such that the illuminated path can be viewed via this path.

2. An inspector as claimed in Claim 1 and comprising light reflecting means (15) disposed in the viewing path (VP or VP2 or VP3) such that the viewing path includes an angle.

3. An inspector as claimed in Claim 2, wherein the light reflecting means (15) is removably mounted so that by removing the reflecting means the viewing path (VP2 or VP3) that includes said angle is replaced by a straight viewing path (VP1).

4. An inspector as claimed in Claim 3, wherein the light reflecting means (15) can be mounted in one or other of two positions such that the viewing path that includes said angle is a path (VP2) of one hand or a path (VP2) of opposite hand.

5. An inspector as claimed in Claim 1 or 2, wherein the viewing path (VP) is via a cut-away (2) that extends over a major portion of one side of a base (1A) of a body (1) of the inspector, whereby said parts to be inspected can be a magnetic head arrangement and tape drive components positioned remote from the head arrangement, all these parts being viewable together via the cut-away (2).

6. An inspector as claimed in any one of the preceding claims and comprising a periscope means (15) attachable to the remainder of the inspector to extend the viewing path (VP or VP1 or VP2 or VP3).

FIG.1

FIG.2

EP 0 295 909 A2

# FIG.3

# FIG.4

# FIG.5

## FIG.6

## FIG.7

# FIG.8